# EUROPÄISCHE PATENTSCHRIFT

(11) **EP 0 699 860 B1**
(45) Veröffentlichungstag und Bekanntmachung des Hinweises auf die Patenterteilung: **14.10.1998**
(21) Anmeldenummer: 95109776.5
(22) Anmeldetag: 23.06.1995
(51) Int. Cl.: F16L 3/24

(54) **Halterung zum Lagern einer Rohrleitung auf einem Profilträger**
Support for bearing a pipeline on a profiled beam
Attache pour supporter une tuyauterie sur une poutre profilée

(30) Priorität: 31.08.1994 DE 9414096 U
(43) Veröffentlichungstag der Anmeldung: 06.03.1996
(73) Patentinhaber: Witzenmann GmbH Metallschlauch-Fabrik Pforzheim, D-75175 Pforzheim (DE)
(72) Erfinder: Berger, Peter W., D-75181 Pforzheim-Eutingen (DE); Müller, Harald, D-75177 Pforzheim (DE); Schmidsberger, Wolfgang, D-08412 Leubnitz (DE)
(74) Vertreter: Lemcke, Rupert, Dipl.-Ing.

(56) Entgegenhaltungen:
- EP-A- 0 456 851
- DE-A- 3 110 716
- DE-A- 3 820 290
- DE-U- 9 206 803
- DE-U- 9 312 520
- US-A- 4 826 113

## Beschreibung

Die Erfindung betrifft eine Halterung zum Lagern einer Rohrleitung auf einem Profilträger, wobei die Rohrleitung mittels eines ein Gehäuse aufweisenden Rollenlagers, mittels eines an einem Lagerteil verschiebbaren Schlittens oder direkt über ein Lagerteil an einem Flansch des Profilträgers axial bewegbar oder axial festlegbar ist, und wobei die Halterung wenigstens eine einen Rand des Flansches umgreifende Klemmbacke und ein davon im wesentlichen parallel zur Rohrleitung und zur Oberfläche des Flansches ausgehendes Spannelement aufweist, das an seinem der Klemmbacke abgewandten freien Ende ein Spannteil trägt.

Als Profilträger, an denen Rohrleitungen gelagert sind, finden überlicherweise T-Träger oder Doppel-T-Träger Verwendung. Denkbar sind jedoch auch andere Profilträger, wenn sie nur einen Rand eines Flansches für die Klemmbacke und eine sich daran anschließende Flanschoberfläche aufweisen. Die Rohrleitung kann bei horizontalem Verlauf auf dem Profilträger oder unter diesem hängend gelagert sein. Denkbar sind auch Lagerungen für vertikal verlaufende Rohrleitungen an dazu passend vertikal angeordneten Profilträgern.

Die zahlreich bekannten Halterungen der eingangs genannten Gattung, für die die EP-A-456 851 ein Beispiel liefert, benötigen verhältnismäßig viele und gegebenenfalls komplizierte Teile, zumal sie in der Regel auf bestimmte Lagerungsarten der Rohrleitung besonders abgestimmt sind, so daß zu einer Lagerungsart passende Halterungsteile nicht für andere Lagerungsarten verwendbar sind. Außerdem weisen bekannte Halterungen vielfach stark hervorstehende Teile auf, die eine Behinderung anderer Anlagenkomponenten und Verletzungsgefahren darstellen sowie anfällig gegen Beschädigungen und Verunreinigungen sind. Schließlich sind bekannte Halterungen in der Regel abhängig von den Abmessungen der Profilträger und müssen entsprechend in mehreren Varianten verfügbar gehalten sein.

Aufgabe der Erfindung ist es daher, eine Halterung der eingangs genannten Art so auszubilden, daß sie mit wenigen einheitlichen Teilen für die üblichen Lagerungsarten auskommt, wobei hervorstehende Teile weitestgehend vermieden und eine Verwendung auch bei unterschiedlichen Profilträgerabmessungen möglich sein sollen.

Diese Aufgabe ist bei einer Halterung der eingangs genannten Gattung dadurch gelöst, daß das Spannteil gegen Verdrehen gesichert und gegen die Wirkung des Spannelementes über eine mit ihm in Eingriff befindliche Ausnehmung des Gehäuses bzw. des Lagerteiles widergelagert ist, und daß das Gehäuse bzw. das Lagerteil auf der der Klemmbacke in Richtung des Spannelementes gegenüberliegenden Seite über ein Halteelement am Profilträger gegen die Wirkung des Spannelementes festgelegt ist.

Diese Maßnahmen haben die Wirkung, daß ein einfach zu gestaltendes Spannteil in einer Ausnehmung des der Lagerung dienenden Teils in Form eines Gehäuses oder eines Lagerteils untergebracht ist, so daß es nicht nennenswert nach außen vorsteht oder im Wege ist, wobei die Anpassung an unterschiedliche Profilträgergrößen in einfacher Weise durch entsprechende Länge des ebenfalls ein einfaches Bauteil bildenden Spannelementes erfolgen kann. Denn für das Rollenlagergehäuse oder das Lagerteil es grundsätzlich gleichgültig, wie groß die Oberfläche des Flansches des Profilträgers ist, nur darf diese Oberfläche nicht zu klein sein.

Damit ist die erfindungsgemäße Halterung durch wenige und einfache Teile gebildet, die gleichermaßen für die unterschiedlichen Lagerungsarten von Rohrleitungen verwendet werden können, denn es bedarf bezüglich der mit der jeweiligen Lagerungsart verbundenen Gehäuse oder Lagerteile jeweils nur der dortigen Anbringung einer passenden Ausnehmung.

Was das die Gegenlagerung bildende Halteelement betrifft, so kann dies ebenfalls aus einer Klemmbacke mit davon parallel zur Oberfläche des Flansches ausgehendem Spannelement mit endständigem Spannteil bestehen, das gegen die Wirkung des Spannelementes über eine mit ihm in Eingriff befindliche Ausnehmung des Gehäuses bzw. des Lagerteiles widergelagert ist, und es kann die Klemmbacke eine zum Rand des Flansches im wesentlichen parallele Kante des Profilträgers umgreifen. In diesem Falle finden also zwei gleiche, einander gegenüberliegende Halterungen Verwendung unter Beibehaltung der bereits geschilderten Vorteile. Für das Halteelement, das im Grunde genommen ja nur einer Widerlagerung dient, sind jedoch auch einfachere Ausführungen denkbar, wie sich nachfolgend noch ergeben wird.

Was die Ausbildung des Spannelementes betrifft, so kann vorgesehen sein, daß das Spannelement eine in einer Bohrung der Klemmbacke drehbare und mit ihrem Kopf an ihr axial festgelegte oder festlegbare Schraube ist.

Bezüglich der Ausbildung der Klemmbacke ist es zweckmäßig, daß diese den Rand des Flansches bzw. der Profilkante mit einem sich an einen Klemmbackenkörper mit im wesentlichen würfelförmiger Außenkontur anschließenden keilförmigen Einschnitt umgreift, daß eine Flanke des Einschnittes eine Wand des Klemmbackenkörpers zum Teil bildet und auf der Oberfläche des Flansches aufliegt, und daß vom Klemmbackenkörper das Spannelement ausgeht. Eine solche Klemmbacke kann als Formteil aus einer entsprechend dicken Platte durch Brennschneiden herausgenommen werden. Es besteht jedoch auch die Möglichkeit, die Klemmbacke als Gußteil oder Schmiedeteil herzustellen oder aus einem entsprechend dicken Blech nach der erforderlichen Außenkontur zu biegen.

Bezüglich der Ausbildung des Spannteiles ist es vorteilhaft, daß dieses ein mit einer seiner Flächen auf der Oberfläche des Flansches aufliegendes, quaderförmiges Bauteil ist, das gegebenenfalls eine Gewindebohrung für den Eingriff einer Schraube aufweist. Dieses Spannteil kann unmittelbar in der Ausnehmung des Gehäuses bzw. des Lagersteiles sitzen. Es besteht jedoch auch die Möglichkeit, daß das Spannteil über einen an ihm angeordneten hakenförmigen Ansatz in die Ausnehmung des Gehäuses bzw. des Lagerteiles eingreift.

Ist die Rohrleitung über ein Rollenlager abgestützt, das ein Gehäuse aufweist, in dem eine oder mehrere Rollen zur Auflagerung der Rohrleitung drehbar gelagert sind, so ist es zweckmäßig, daß das Spannelement eine quer zu seiner Längserstreckung neben der Klemmbacke gelegene, zur Flanschfläche im wesentlichen senkrechte Gehäusewand über eine Gehäusebohrung durchragt und daß die Ausnehmung für das Spannteil auf der der Klemmbacke abgewandten Seite der Gehäusewand im auf der Flanschfläche liegenden Gehäuseboden angeordnet ist. Damit ist das Spannteil innerhalb des vom Rollenlagergehäuse umfangenen Raumes untergebracht. Ist dazu noch vorgesehen, daß die Ausnehmung unmittelbar neben der Gehäusewand angeordnet ist, so kann die Wand als Anlage für das Spannteil und damit zu dessen zusätzlicher Abstützung herangezogen werden.

Im Falle der Verwendung des beschriebenen Rollenlagers kann das der Widerlagerung dienende Halteelement mindestens ein Haken sein, es kann der Haken mit seinem einen Ende eine von der Klemmbacke entfernte, zur Längserstreckung des Spannelementes und zur Flanschfläche senkrechte Gehäusewand des Rollenlagers über wenigstens eine Gehäuseöffnung haltend durchfassen, und es kann der Haken mit seinem anderen Ende gegen die Wirkung des Spannelementes am Profilträger festgelegt sein. Hier ist also das der Widerlagerung dienende Halteelement als einfacher, entsprechend aus beispielsweise einem drahtförmigen Profil oder einem Blech gebogener Haken herstellbar, der sich in einfacher Weise an Ort und Stelle einklinken läßt, so daß die gesamte Spannarbeit nur von dem gegenüberliegenden Spannelement durchzuführen ist. Damit ist die Handhabung bei der Herstellung der Halteverbindung vereinfacht.

Bei einer anderen Gestaltung eines Rollenlagergehäuses kann vorgesehen sein, daß das Spannelement zu einer neben der Klemmbacke gelegenen, zur Flanschfläche im wesentlichen senkrechten Gehäusewand parallel ist, und daß die Ausnehmung für das Spannteil eine neben dem Spannelement gelegene Öffnung der Gehäusewand ist. Hier findet zweckmäßig das bereits erwähnte Spannteil mit hakenförmigem Ansatz Verwendung, wobei dann der hakenförmige Ansatz in die Öffnung der Gehäusewand eingreift.

Im Falle eines solchen Rollenlagergehäuses ist es zweckmäßig, daß das Halteelement mindestens ein Haken ist, daß der Haken mit seinem einen Ende eine neben der Klemmbacke gelegene, zum Spannelement parallele und zur Flanschfläche im wesentlichen senkrechte Gehäusewand über wenigstens eine von der Klemmbacke entfernte Gehäuseöffnung haltend durchfaßt, und daß der Haken mit seinem anderen Ende gegen die Wirkung des Spannelementes am Profilträger festgelegt ist. Auch hier also die Möglichkeit der Verwendung eines einfachen Hakens als Widerlager mit den dafür bereits vorstehend beschriebenen Vorteilen.

Die andere, bereits eingangs erwähnte Möglichkeit der Lagerung einer Rohrleitung besteht über einen an einem Lagerteil verschiebbaren Schlitten. Ein solcher Schlitten kann beispielsweise durch ein T-Profil gebildet sein, mit dessen Längssteg die Rohrleitung verbunden ist. Eine andere Möglichkeit besteht in einem entsprechend ausgebildeten Schlittengehäuse, an dem die Rohrleitung durch schellenförmige Teile befestigt ist. Für diese Form der Lagerung einer Rohrleitung ist es vorteilhaft, daß das auf der Oberfläche des Flansches aufliegende Lagerteil für zwei einander gegenüberliegende sowie untereinander und zur Oberfläche des Flansches parallele Kanten des Schlittens beidseitig je ein eine der Kanten umgreifendes Profil aufweist, daß das Spannelement jeweils einer neben jeder Kante angeordneten Klemmbacke in dem Profil sitzt, und daß das Lagerteil auf der den Klemmbacken gegenüberliegenden Seite das mit dem Profilträger in Eingriff befindliche Halteelement bildet. Dabei kann zusätzlich vorgesehen sein, daß die Kanten des Schlittens seitlich an den Klemmbacken und den von den Spannelementen getragenen Klemmteilen geführt sind,

Hier sind also durch das Lagerteil zwei Kanten des Schlittens erfaßt, beim Beispiel eines Schlittens aus einem T-förmigen Profil die Kanten dessen Quersteges, wodurch die Rohrleitung verschiebbar und gegen Abheben vom Profilträger gesichert gelagert ist. Bezüglich der Rohrleitung auf beiden Seiten ist das Lagerteil über eine der in Rede stehenden Halterungen befestigt, wobei die Spannelemente und auch die Spannteile im Körper des Lagerteiles untergebracht sind und damit nicht nach außen vortreten. Die Widerlagerung ist in einfacher Weise durch entsprechende Ausbildung des Lagerteiles an ihrer den Klemmbacken gegenüberliegenden Seite zur Darstellung des Halteelementes gestaltet, so daß es hierzu keiner zusätzlichen Bauteile bedarf und die Spannarbeit für die Halterung nur von einer Seite her durchgeführt werden muß. In Anlehnung an bereits beschriebene Bauformen kann auch in diesem Falle vorgesehen sein, daß das Halteelement ein eine Kante des Profilträgers umfassender, hakenförmiger Ansatz des Lagerteiles ist.

Soll die Rohrleitung über ein Lagerteil unmittelbar am Profilträger verschiebbar oder feststehend gelagert sein, so kann im Sinne der Erfindung vorgesehen sein, daß das auf der Oberfläche des Flansches aufliegende Lager Mittel zur Aufnahme der der Rohrleitung aufweist, daß die Spannteile der beidseits der Rohrleitung angeordneten Klemmbacken mit dem Lagerteil oder den Mitteln zur Aufnahme der Rohrleitung in widerlagerndem Eingriff sind, daß das Lagerteil auf der den Klemmbacken gegenüberliegenden Seite das mit dem Profilträger in Eingriff befindliche Halteelement bildet, und daß am Lagerteil bzw. an den Mitteln wenigstens ein die Rohrleitung umfassender Bügel befestigt ist.

Hier kann vorgesehen sein, daß die Mittel zur Aufnahme der Rohrleitung eine zu dieser parallelen Rinne des Lagerteiles sind, und daß die Spannteile in eine jeweils neben der Rinne gelegene Ausnehmung des Lagerteiles eingreifen.

Dabei ist es zweckmäßig, daß das Lagerteil aus einem Blechzuschnitt besteht, aus dem die Rinne durch beidseitige Biegung je eines im wesentlichen U-förmigen, zur Rohrleitung parallel verlaufenden Profils gebildet ist, daß die Spannelemente in das Profil ragen und daß die Ausnehmungen Fenster in der Oberfläche des Profils sind. Auch hier also die Unterbringung der Spannelemente und der Spannteile im wesentlichen innerhalb der Profilierung des Führungsteiles.

Die die Fenster durchragenden Spannteile können auf der Außenseite des Profils mit dem Kopf einer T-förmigen Profilierung anliegen, um auf diese Weise einem Abheben des Führungsteiles vom Profilträger entgegenzuwirken.

Nach einer anderen Bauform kann vorgesehen sein, daß die Mittel zur Aufnahme der Rohrleitung eine auf dem Lagerteil befestigte Stütze sind, und daß die Spannteile in Ausnehmungen der Stütze eingreifen.

In ähnlicherweise besteht auch die Möglichkeit, daß die Mittel zur Aufnahme der Rohrleitung eine auf dem Lagerteil befestigte Stütze sind, und daß die Spannteile eine zum Rand des Flansches im wesentlichen parallele Aufbiegung des Lagerteiles hintergreifen.

In beiden letztgenannten Fällen kann das Lagerteil durch einen Blechzuschnitt gebildet sein.

Schließlich kann ähnlich bereits vorbeschriebener Lösungen auch in den letztgenannten Fällen vorgesehen sein, daß das Halteelement durch wenigstens einen eine Kante des Profilträgers umfassenden Haken des Blechzuschnittes gebildet ist.

Weitere Merkmale und Einzelheiten der Erfindung ergeben sich aus der nachfolgenden Beschreibung von Ausführungsformen, die auf der Zeichnung dargestellt sind. In der Zeichnung zeigen:
- Figur 1: einen Profilträger mit aufgespanntem Gehäuse eines Rollenlagers für eine Rohrleitung in perspektivischer Ansicht;
- Figur 2: die Rückansicht eines Gehäuses gemäß Figur 1 mit einem abgewandelten Halteelement;
- Figur 3: eine Schnittansicht gemäß der Schnittlinie III-III in Figur 1;
- Figur 4: die perspektivische Ansicht der Aufspannung eines anders ausgebildeten Rollenlagers auf einem Profilträger in teilweiser, vereinfachter Darstellung;
- Figur 5: eine abgewandelte Aufspannung eines Rollenlagergehäuses ähnlich Figur 4;
- Figur 6: die Aufspannung eines Lagerteiles für einen eine Rohrleitung tragenden Schlitten auf einem Profilträger in perspektivischer Ansicht;
- Figur 7: die Seitenansicht VII-VII aus Figur 6;
- Figur 8 und 9: einen Rohrleitungsschlitten in Stirn- und Seitenansicht;
- Figur 10: die teilweise, perspektivische Ansicht der Aufspannung eines Lagerteiles für eine Rohrleitung auf einen Profilträger;
- Figur 11: die Schnittansicht XI-XI aus Figur 10;
- Figur 12: einen mittigen Querschnitt durch das Lagerteil gemäß Figur 10;
- Figur 13: die teilweise, perspektivische Ansicht der Aufspannung eines weiteren Lagerteiles für eine Rohrleitung auf ein Profilträger;
- Figur 14: eine ausschnittweise Seitenansicht aus Figur 13;
- Figur 15: die teilweise, perspektivische Ansicht der Aufspannung eines Lagerteiles ähnlich Figur 13 für eine Rohrleitung auf einen Profilträger;
- Figur 16: eine teilweise Seitenansicht aus Figur 15 und
- Figuren 17 bis 19: verschiedene Klemmbackenausführungen.

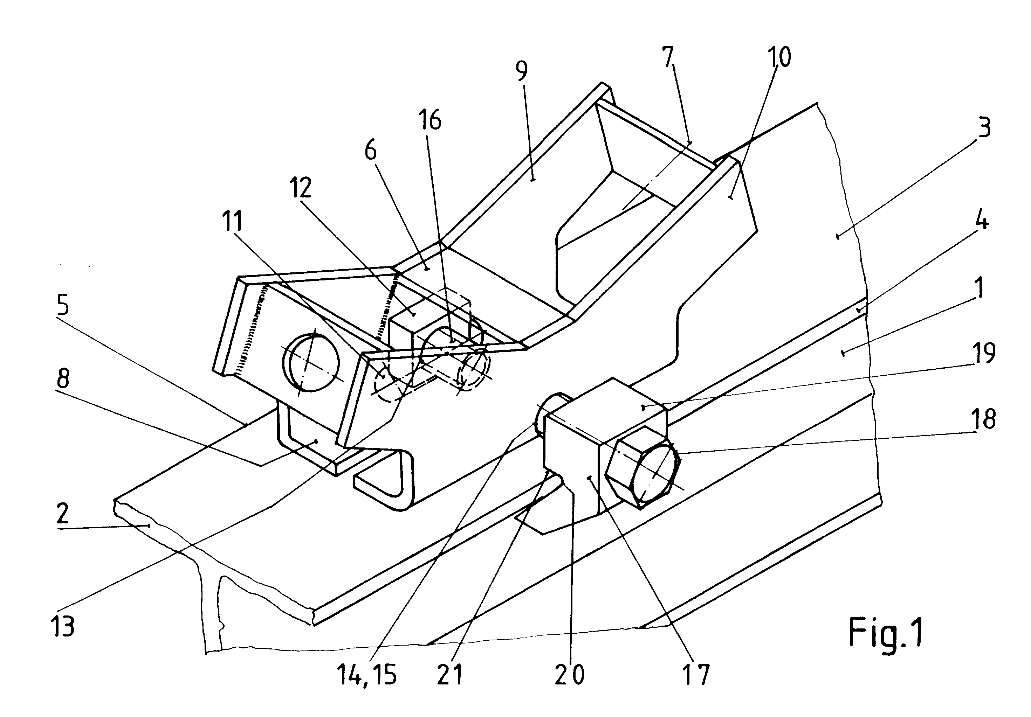

Figur 1 zeigt perspektivisch einen Profilträger 1 in Form eines Doppel-T-Trägers, auf dessen Flansch 2 mit Flanschoberfläche 3, Flanschrand 4 und Flanschkante 5 das Gehäuse 6 eines Rollenlagers für eine nicht dargestellte, sich quer zur Längserstreckung des Gehäuses 6 erstreckende Rohrleitung aufgespannt ist. Die Y-förmig angeordneten Rollen dieses an sich bekannten Rollenlagers sind nicht dargestellt. Mit 7 ist nur eine der Rollenachsen veranschaulicht.

Der auf der Oberfläche 3 des Flansches 2 aufliegende Boden 8 des Gehäuses 6 weist neben den Gehäusewänden 9, 10 zwei Ausnehmungen 11 auf, von denen die hintere, neben der Gehäusewand 9 liegende Ausnehmung ersichtlich ist, indem die Gehäusewand 10 durchsichtig gedacht ist. Die andere Ausnehmung 11 liegt in gleicher Weise innerhalb des Gehäuses neben der Gehäusewand 10.

In den Ausnehmungen 11 stehen auf der Oberfläche 3 des Flansches 2 je ein Spannteil 12 in Form eines quaderförmigen und somit gegen Verdrehen gesicherten Bauteiles, dessen Gewindebohrung 13 über jeweils eine Bohrung 14 der Gehäusewände 9, 10 durch das eine Ende eines Spannelementes 15, 16 in Form einer zur Oberfläche 3 parallelen Schraube erreichbar sind.

Das andere Ende der Spannelemente 15, 16 durchragt frei drehbar die Bohrung je einer Klemmbacke 17 und trägt auf ihrem freien Ende einen Schraubenkopf 18.

Die Klemmbacken 17 weisen einen im wesentlichen würfelförmigen Klemmbackenkörper 19 auf, an den sich ein keilförmiger Einschnitt 20 anschließt, mit dem die Klemmbacken 17 den Rand 4 und die Kante 5 umgreifen. Eine Flanke 21 des Einschnittes 20 bildet teilweise eine Wand des Klemmbackenkörpers 19, mit der dieser auf der Oberfläche 3 des Flansches 2 aufliegt. Es versteht sich von selbst, daß die Klemmbacken 17 von den Gehäusewänden 9, 10 einen gewissen Abstand aufweisen. Die soweit anhand der Figur 1 beschriebene Anordnung zeigt, daß die Halterungen für das Gehäuse 6 weitgehend in diesem selbst untergebracht sind. Für die Aufspannung des Gehäuses 6 besteht bezüglich des Profilträgers 1 bzw. des gegenseitigen Abstandes von Rand 4 und Kante 5 ein weitgehender Spielraum, da unterschiedliche Abstände zwischen Rand 4 und Kante 5 leicht durch unterschiedliche Länge der Spannelemente 15, 16 überbrückt werden können.

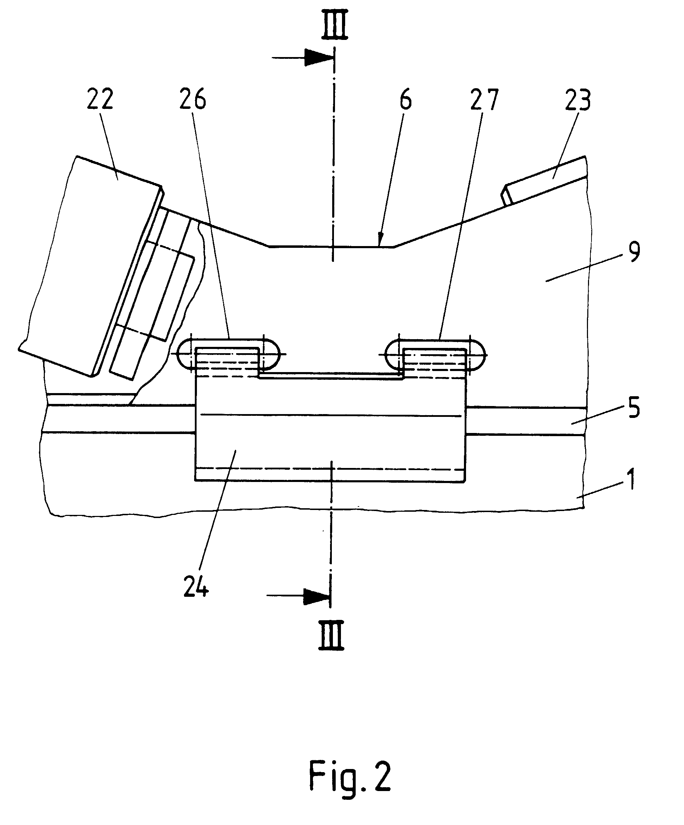

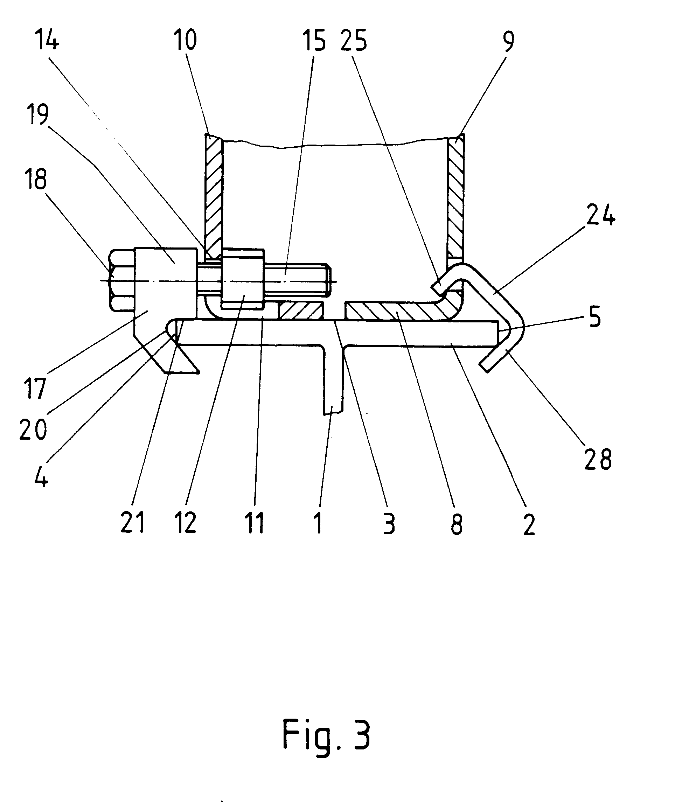

Die Figuren 2 und 3 zeigen einen mit dem Gegenstand gemäß Figur 1 vergleichbaren Gegenstand bezogen auf Figur 1 von hinten gesehen und in Schnittansicht. Dabei zeigt Figur 2 noch ansatzweise Rollen 22, 23, die in Figur 1 nicht ersichtlich sind und der axial beweglichen Lagerung der Rohrleitung dienen. Die Figuren 2 und 3 lassen erkennen, daß das bezogen auf Figur 1 hinten liegende Halteelement ein Haken 24 ist, der mit seinem einen Ende 25 die Gehäusewand 9 über wenigsten eine Gehäuseöffnung 26, 27 haltend durchfaßt und mit seinem anderen Ende 28 gegen die Wirkung des Spannelementes 15 an der Kante 5 des Profilträgers 1 festgelegt ist, indem er diese umgreift.

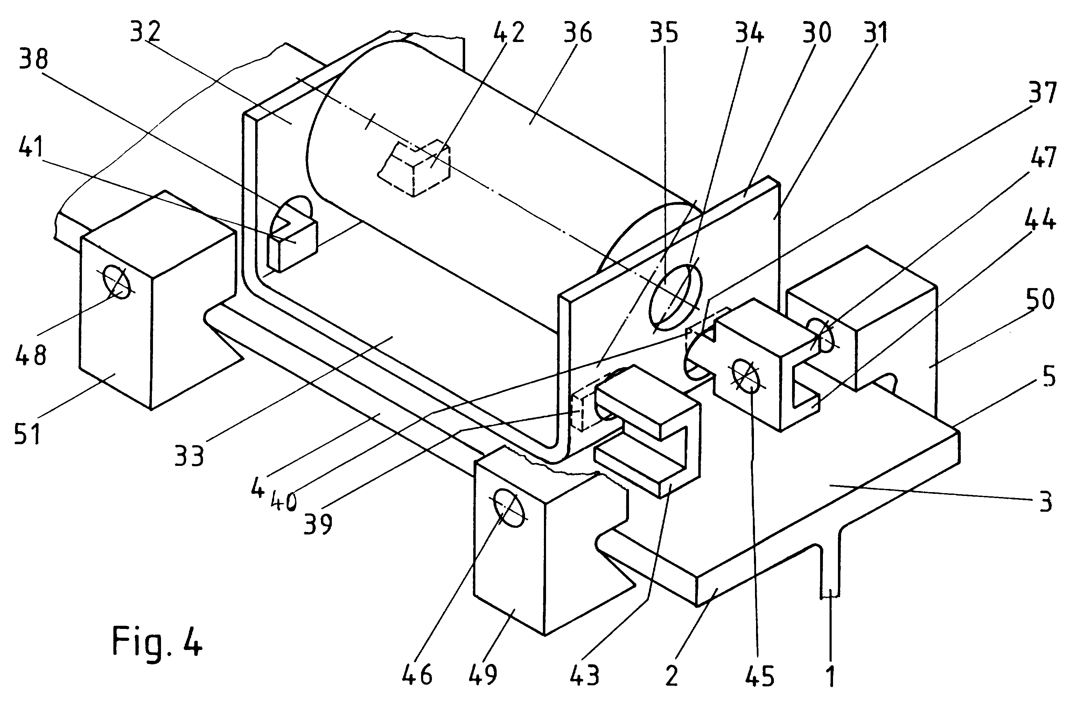

Während bei den Ausführungen gemäß Figur 1 bis 3 das Rollenlagergehäuse 6 zum Rand 4 bzw. der Kante 5 parallele Gehäusewände 9, 10 aufweist, zeigt Figur 4 das Beispiel eines Rollenlagergehäuses 30 mit sich zum Rand 4 bzw. der Kante 5 senkrecht erstreckenden Gehäusewänden 31, 32, die durch einen auf der Oberfläche 3 des Flansches 2 aufliegenden Boden 33 miteinander verbunden sind. Die Gehäusewände 31, 32 tragen über Bohrungen 34 die Achszapfen 35 einer Lagerrolle 36, auf der eine nicht dargestellte Rohrleitung axial verschiebbar abgestützt ist.

Die Gehäusewände haben Ausnehmungen in Form von Öffnungen 37, 38, von denen nur je eine in der Wand 31 und der Wand 32 dargestellt sind. Die Ausnehmungen durchragen hakenförmige Ansätze 39, 40, 41 und 42 von dadurch gegen Verdrehen gesicherten, quaderförmigen Spannteilen 43, 44, die je eine Gewindebohrung 45 mit zur Oberfläche 3 paralleler Achse aufweisen. In den Gewindebohrungen 45 sitzen nicht dargestellte Spannelemente in Form von Gewindestangen, die in Bohrungen 46, 47, 48 von Klemmbacken 49, 50, 51 der bereits anhand der Figuren 1 und 3 beschriebenen Art frei drehbar sitzen. Auf der den Spannelementen 43, 44 abgewandten Seite der Klemmbacken 49 bis 51 tragen die Schrauben wieder Schraubenköpfe, wie sie ebenfalls in Figur 1 und 3 gezeigt sind.

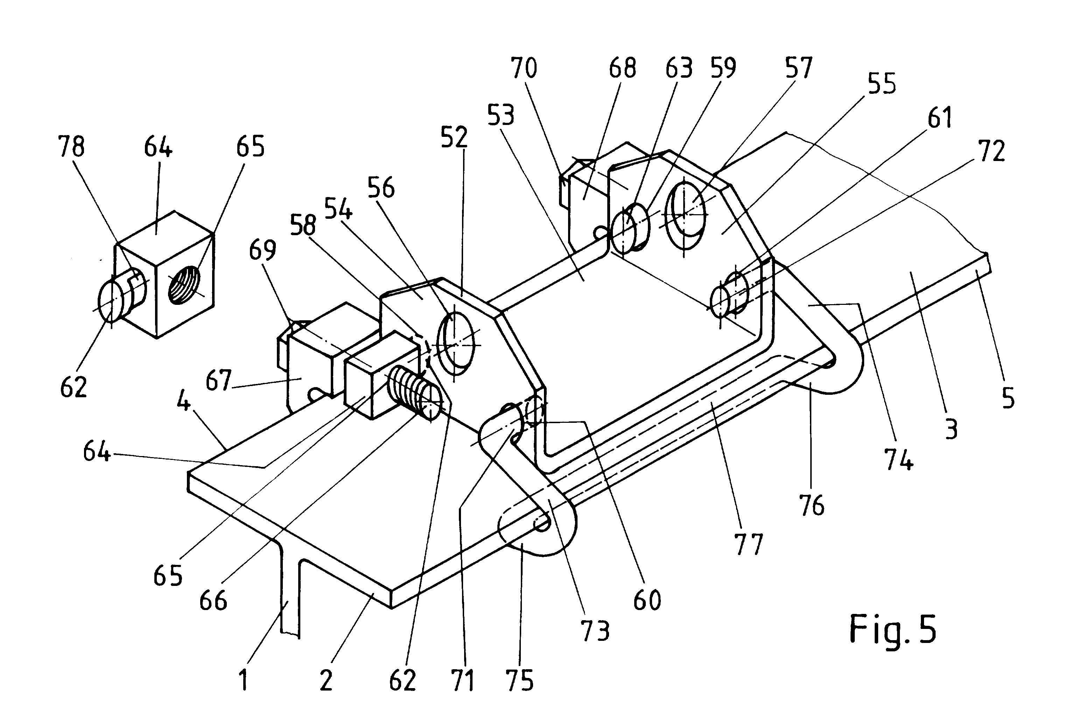

Figur 5 zeigt auf einem Profilträger 1 ein mit dem Gehäuse 30 gemäß Figur 4 vergleichbares Rollenlagergehäuse 52 mit auf der Oberfläche 3 des Flansches 2 aufliegender Gehäusewand 53 und senkrechten Wänden 54 und 55, die wiederum Bohrungen 56, 57 für die Achsezapfen einer nicht dargestellten Rolle als Auflagerung für eine ebenfalls nicht dargestellte Rohrleitung aufweisen.

In der Nähe des Randes 4 haben die Wände 54, 55 Ausnehmungen 58, 59 und in der Nähe der Kante 5 Ausnehmungen 60, 61.

In die Ausnehmungen 58, 59 ragen hakenförmige Ansätze 62, 63 von durch diese gegen Verdrehen gesicherten quaderförmigen Spannelementen 64, die auf der Oberfläche 3 aufliegen und eine zu dieser parallele, zum Rand 4 senkrechte Gewindebohrung 65 aufweisen, in der ein Spannelement 66 in Form einer Schraube sitzt. Das andere Ende der Schraube sitzt in einer Klemmbacke 67, 68 der bereits beschriebenen Art frei drehbar und ist auf der dem Spannelement 64 abgewandten Seite durch einen Schraubenkopf 69, 70 axial gehalten.

Die Öffnungen 60, 61 werden von den abgewinkelten Enden 71, 72 von Haken 73, 74 durchragt, wobei die Haken mit ihren anderen Enden 75, 76 die Kante 5 umfassen und unterhalb der Kante durch eine Verbindung 77 so zusammengefaßt sind, daß ein Hakenbügel gebildet ist, dessen Enden 71, 72 durch Auseinanderbiegen des Hakenbügels über die Gehäusewände 54, 55 geschoben und in die Bohrungen 60, 61 eingerastet werden können. Auf diese Weise sind die bei Figur 4 den Klemmbacken 49, 51 gegenüberliegenden Teile der Halterung an der Kante 5 durch ein einfaches und billiges Widerlager ersetzt, so daß die gesamte Spannarbeit nur noch an den Schraubenköpfen 69, 70 vorgenommen zu werden braucht.

Figur 5 zeigt links oben herausgezeichnet noch das Spannteil 64 in um eine vertikale Achse um 180° gedrehter Weise, woraus ersichtlich ist, daß der hakenförmige Ansatz 62 sich in einfacher Weise dadurch ausbilden läßt, daß ein am quaderförmigen Grundkörper des Spannteiles 64 angeformter Zapfen mit einer Nut 78 versehen wird.

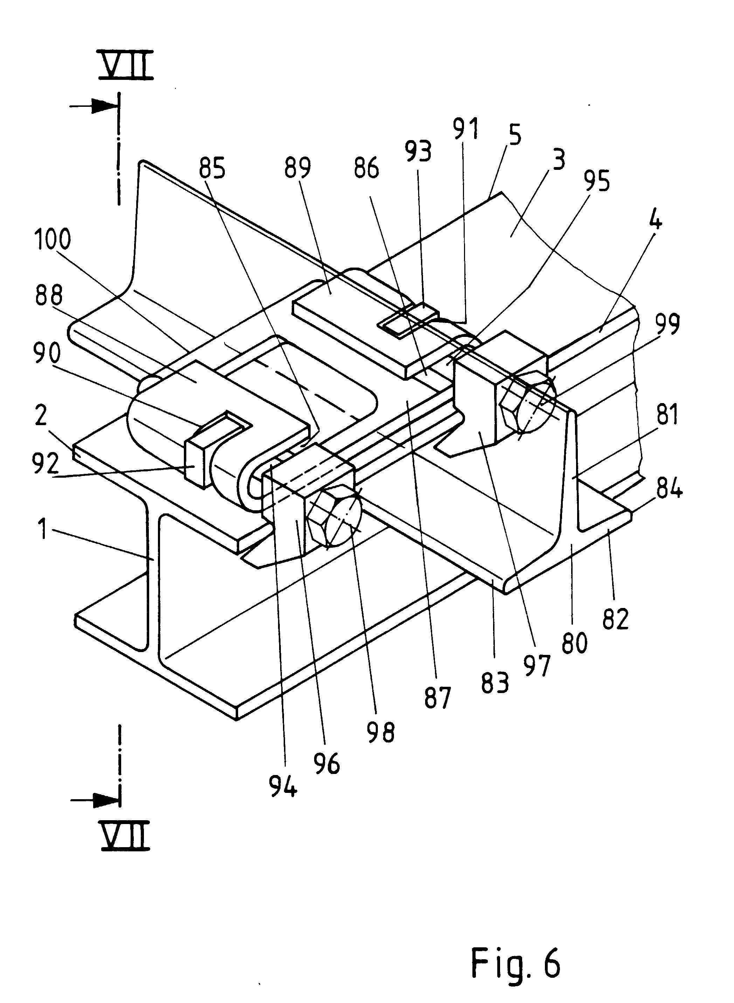

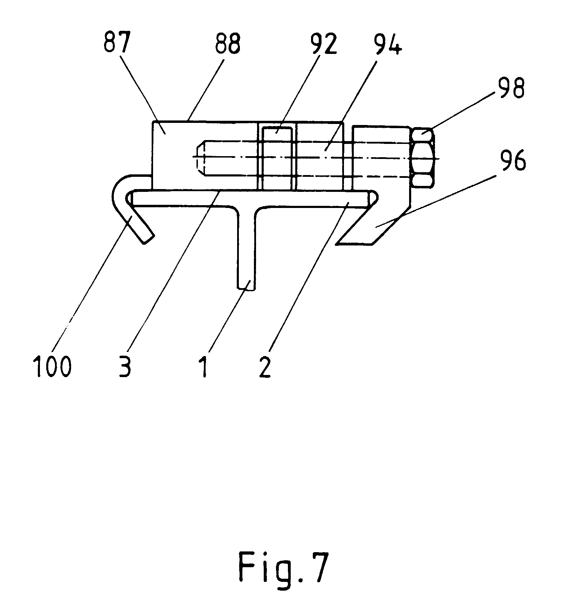

Die Figuren 6 und 7 zeigen zunächst einen hier durchsichtig dargestellten Schlitten 80 mit T-förmigem Querschnitt, auf dessen Längssteg 81 die nicht dargestellte, zum Schlitten parallele Rohrleitung befestigt ist. Der Quersteg 82 liegt zur Oberfläche 3 des Flansches 2 parallel und ist mit seinen Kanten 83, 84 in Profilen 85, 86 eines insgesamt mit 87 bezeichneten Lagerteiles verschiebbar. Das Lagerteil 87 besteht aus einem Blechzuschnitt, an dem die seitlichen Profile durch Umbiegen von Lappen 88, 89 gebildet sind.

Im Bereich der Umbiegung der Lappen 88, 89 weist das Lagerteil 87 Ausnehmungen 90, 91 auf, in denen quaderförmige Spannteile 92, 93 gegen Verdrehen gesichert sitzen, die den Spannteilen gemäß Figur 1 entsprechen. Die durch die Spannteile 92, 93 gehenden Spannelemente 94, 95 durchragen wieder Spannbacken 96, 97 und tragen an ihren Enden Schraubenköpfe 98, 99.

Auf diese Weise kann in der bereits beschriebenen Art das Lagerteil 87 in Richtung auf die Spannbacken 96, 97 gespannt werden. Als Widerlager hierzu dient ein am Lagerteil 87 den Spannbacken 96, 97 gegenüber aus dem Blechteil abgebogener, hakenförmiger Ansatz 100, der die Kante 5 des Profilträgers 1 umfaßt und ein Abheben des Lagerteiles 87 sowie des Schlittens 80 verhindert.

Da die Spannelemente 94, 95 neben den Kanten 83, 84 des Schlittens 80 in den Profilen 85, 86 sitzen und praktisch spielfrei über der zur Oberfläche 3 parallelen Bodenplatte des Lagerteiles 87 liegen können, ist auch hierdurch ein Abheben des Lagerteiles 87 verhindert.

Die seitliche Führung des Schlittens 80 ist durch die den Kanten 83, 84 zugewandten Oberflächen der Spannteile 92, 93 einerseits sowie der Spannbacken 96, 97 andererseits gegeben.

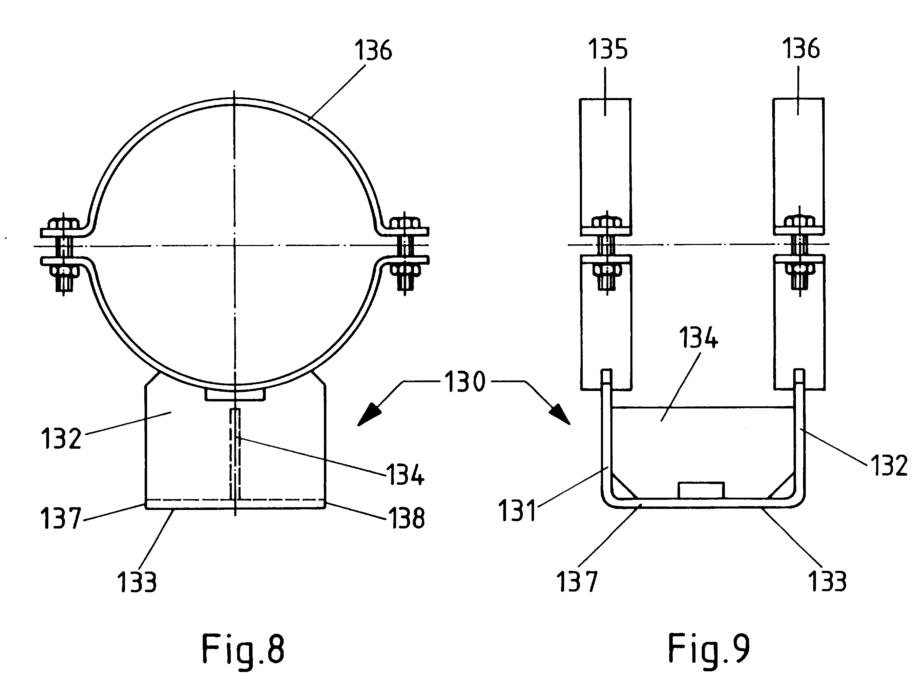

Die Figuren 8 und 9 zeigen eine andere Ausbildung eines Schlittens 130, der durch U-förmiges Biegen eines Bleches gebildet ist, so daß vertikale Seitenwände 131, 132 entstehen, die von einer Bodenplatte 133 ausgehen und durch einen mittigen Quersteg 134 versteift sind. An ihren oberen Enden tragen die Wände 131, 132 Schellen 135, 136, in die die nicht dargestellte Rohrleitung in bekannter Weise mittels der gezeigten Spannschrauben eingespannt werden kann.

Die Bodenplatte 133 bildet seitlich Kanten 137, 138, über die der Schlitten 130 in den Profilen 85, 86 gemäß Figur 6 geführt sein kann. Für eine axiale Verschiebbarkeit der Rohrleitung ist es selbstverständlich, daß der Abstand der Wände 131, 132 des Schlittens 130 größer ist als die in Schieberichtung gesehene Breite der Lappen 88, 89.

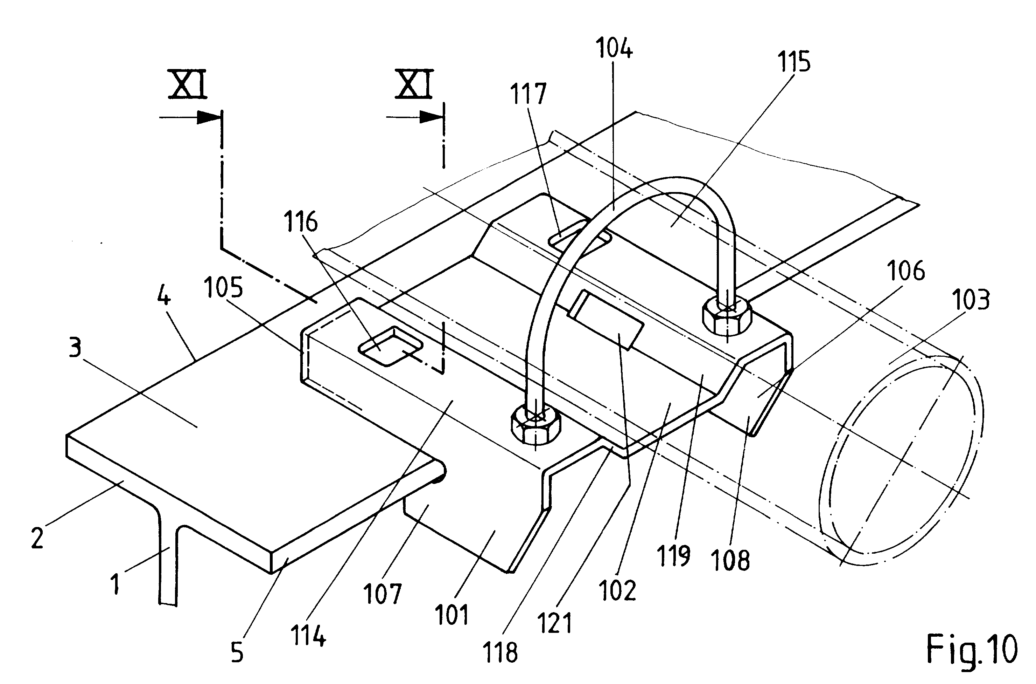

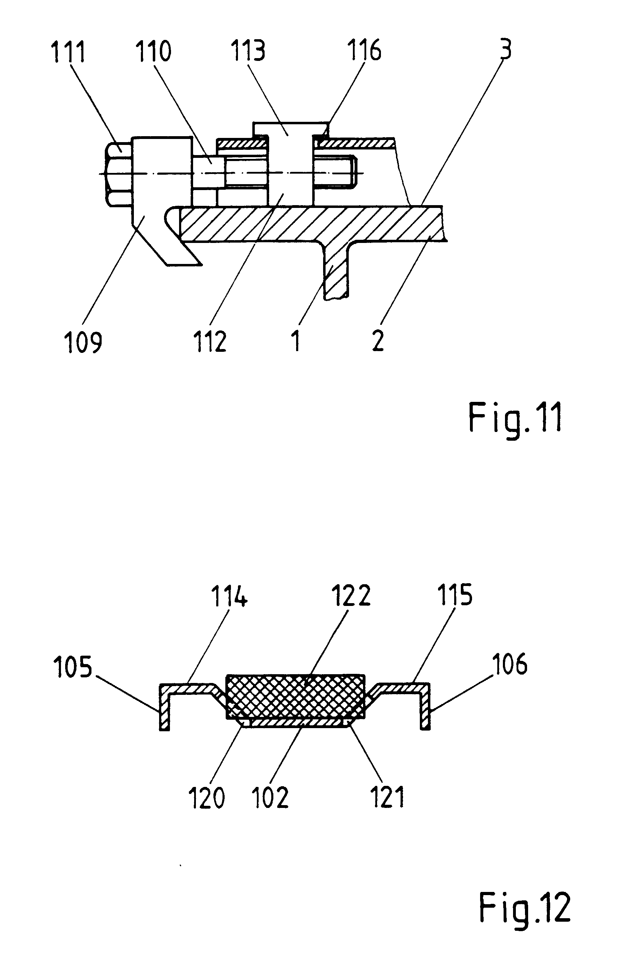

Die Figuren 10 und 11 zeigen die Halterung eines Lagerteiles 101 auf der Oberfläche 3 eines Profilträgers 1. Das Lagerteil 101 trägt in einer an ihm gebildeten Rinne 102 eine darin liegende Rohrleitung 103, die gegen Abheben vom Lagerteil 101 durch wenigstens einen Bügel 104 gehindert ist, der mit dem Lagerteil 101 verbunden ist. Je nach dem, wie die Befestigung des Bügels 104 erfolgt, kann die Rohrleitung 103 in der Rinne 102 axial verschiebbar sein oder aber auf dem Lagerteil 101 festgeklemmt sein.

Das Lagerteil 101 ist aus einem Blechzuschnitt gebildet, aus dem die Rinne durch beiseitige Biegung je eines im wesentlichen U-förmigen, zur Rohrleitung 103 parallel verlaufenden Profils 105, 106 gebildet ist. Für die Umfassung der Kante 5 sind am Lagerteil 101 aus dem Blechzuschnitt Haken 107, 108 gebildet.

Zur Verspannung des Lagerteiles 101 gegenüber dem Rand 4 des Profilträgers 1 dient die im einzelnen in Figur 11 dargestellte Halterung, die in Figur 10 nicht gezeigt ist. Diese Halterung weist wiederum Klemmbacken 109, ein Spannelement 110 in Form einer Schraube, einen Schraubenkopf 111 und ein gegen Verdrehen gesichertes Spannteil 112 auf, das mit einer Gewindebohrung auf dem Spannelement 110 sitzt. Das auf der Oberfläche 3 des Profilträgers 1 aufliegende Spannteil 112 hat auf seiner der Oberfläche 3 abgewandten Seite ein T-förmige Erweiterung 113, mit der es auf der Oberfläche 114, 115 des Profils 105, 106 aufliegt. Die T-förmige Erweiterung 113 ist größer als der Querschnitt von Fenstern 116, 117 des Pofils 105, 106, durch die das jeweilige Klemmteil 112 ragt. Auf diese Weise ist ein Abheben des Lagerteiles 101 von der Oberfläche 3 verhindert, dem im übrigen auch die Haken 107, 108 entgegenwirken.

Wie die Figuren 10 und 12 zeigen, haben die die Rinne 102 begrenzenden, schräg verlaufenden Wände 118, 119 noch Fenster 120, 121, über die ein in der Rinne 102 liegender Streifen 122 aus Gleitmaterial gegen Verschieben gehalten ist, auf dem die Rohrleitung 103 aufliegt.

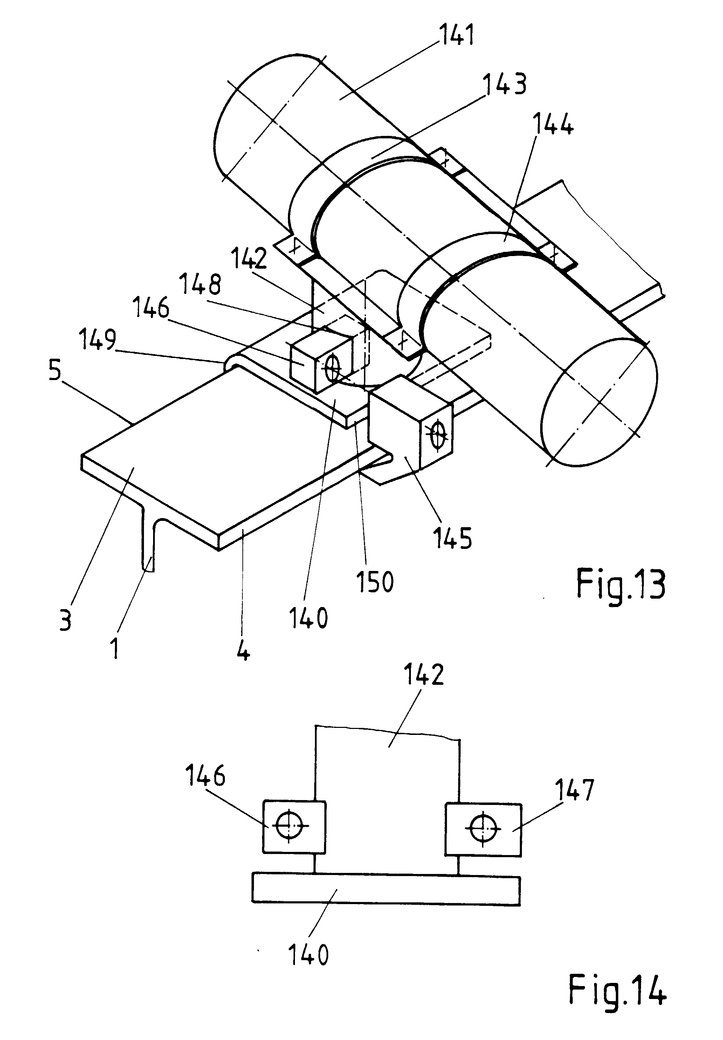

Die Figuren 13 und 14 zeigen die Halterung eines Lagerteiles 140 in Form eines Blechzuschnittes auf der Oberfläche 3 eines Profilträgers 1 zur Bildung eines Festpunktes für eine Rohrleitung 141. Dazu ist auf dem Lagerteil 140 eine Stütze 142 befestigt, auf die das Rohr 141 mit Hilfe von Klemmbügeln 143, 144 aufgespannt ist.

Beidseits der Rohrleitung 141 sitzen in bereits geschilderter Weise auf dem Rand 4 des Profils 1 Klemmbacken 145, in denen frei drehbar wieder nicht dargestellte Schrauben sitzen. Das Gewinde der Schrauben geht mit seinem jeweils freien Ende in klotzförmige und gegen Verdrehen gesicherte Spannteile 146, 147, die in Ausnehmungen 148 der Stütze 142 stecken.

Auf der den Klemmbacken 145 abgewandten Seite des Profilträgers 1 umgreift das Lagerteil 140 die Kante 5 mit einer hakenförmigen Biegung 149. Es versteht sich von selbst, daß bei fest aufsitzendem Lagerteil 140 dessen Vorderkante 150 einen Abstand von der Klemmbacke 145 hat.

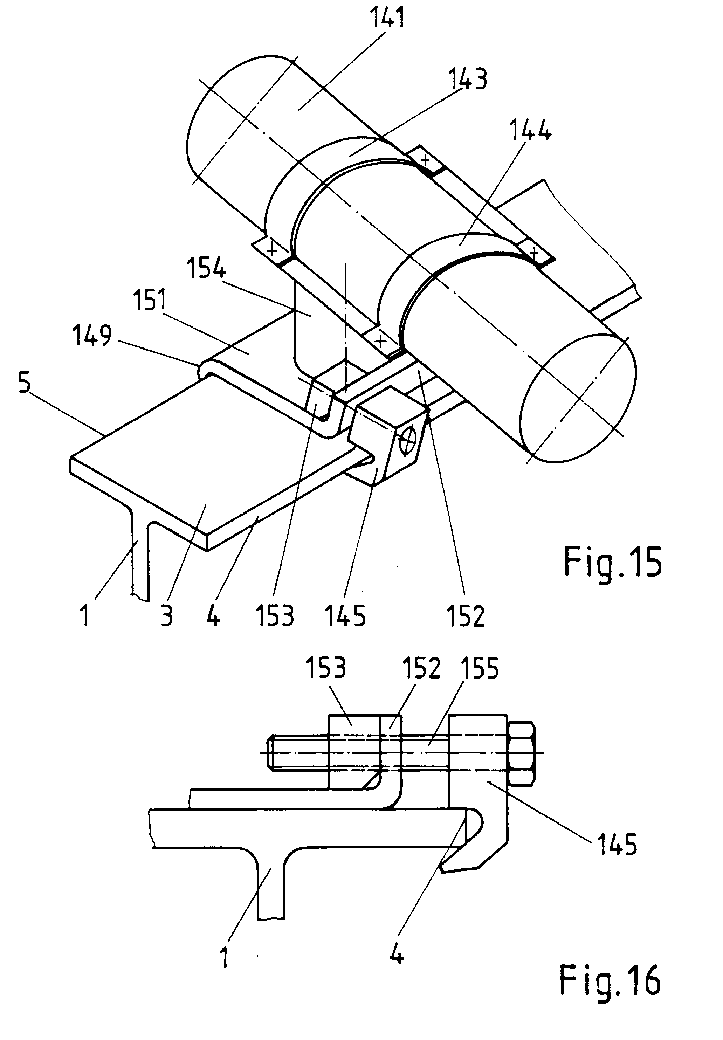

Die Figuren 15 und 16 zeigen eine der Ausführungsform gemäß Figuren 13 und 14 ähnliche Bauform, weshalb dort vergleichbare Teile ohne erneute Beschreibung mit der Bezifferung gemäß Figuren 13 und 14 versehen sind. Der Unterschied besteht lediglich darin, daß das Lagerteil 151 an seiner der Klemmbacke 145 zugewandten Seite eine zum Rand 4 des Profilträgers 1 parallele Aufbiegung 152 aufweist, die neben dem Klemmteil 145 durch eine Schraube 155 durchquert wird, die dann in eine Gewindebohrung des gegen Verdrehen gesicherten Klemmteiles 153 eingeschraubt ist, daß auf der der Klemmbacke 145 abgewandten Seite der Aufbiegung 152 sitzt. Entsprechend hat die Stütze 154 keine Aus- nehmungen für Klemmteile.

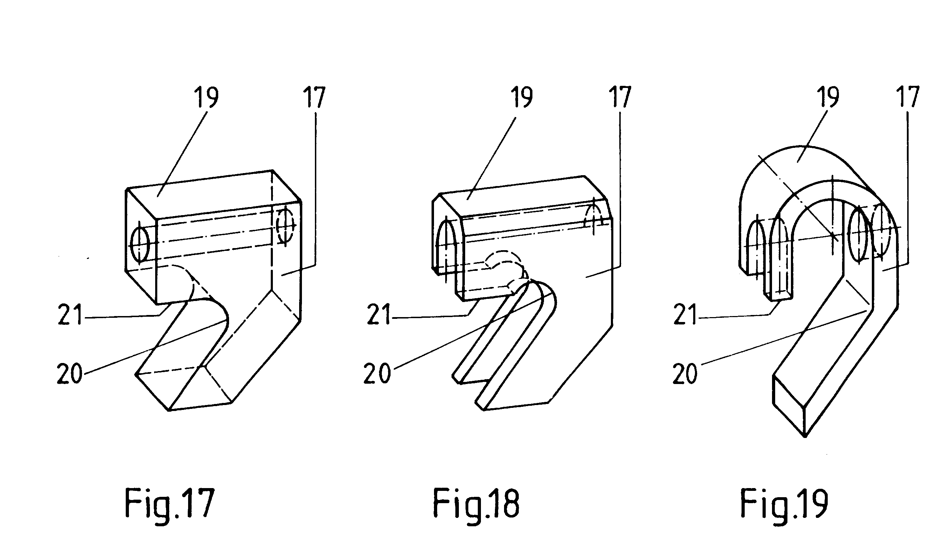

Die Figuren 17 bis 19 zeigen noch verschiedene Ausbildungsmöglichkeiten für den Klemmkörper. So ist in Figur 17 der in den vorhergehenden Figuren gezeigte Klemmkörper dargestellt und noch einmal mit den anhand Figur 1 verwendeten Ziffern versehen. Ein solcher Klemmkörper kann beispielsweise durch Brennschneiden aus einem entsprechend dicken Blech herausgetrennt werden.

Figur 18 zeigt einen beispielsweise durch Gießen hergestellten Klemmkörper, während der Klemmkörper gemäß Figur 19 durch entsprechendes Biegen eines Bleches hergestellt ist.

## Patentansprüche

1. Halterung zum Lagern einer Rohrleitung (103, 141) auf einem Profilträger (1), wobei die Rohrleitung (103, 141) mittels eines ein Gehäuse (6, 30, 52) aufweisenden Rollenlagers, mittels eines an einem Lagerteil (87) verschiebbaren Schlittens (80, 130) oder direkt über ein Lagerteil (101, 140, 151) an einem Flansch (2) des Profilträgers (1) axial bewegbar oder axial festlegbar ist, und wobei die Halterung wenigstens eine einen Rand (4) des Flansches (2) umgreifende Klemmbacke (7, 49-51, 67, 68, 96, 97, 109, 145) und ein davon im wesentlichen parallel zur Rohrleitung (103, 41) und zur Oberfläche (3) des Flansches (2) ausgehendes Spannelement (15, 6, 66, 94, 95, 110, 155) aufweist, das an seinem der Klemmbacke (17, 49-51, 67 68, 96, 97, 09, 145) abgewandten freien Ende ein Spannteil (12, 43, 44, 64, 92, 93, 1112, 146, 147, 153) trägt,
dadurch gekennzeichnet,
daß das Spannteil gegen Verdrehen gesichert und gegen die Wirkung des Spannelementes über eine mit ihm in Eingriff befindliche Ausnehmung (11, 37, 38, 58, 59, 90, 91, 116, 117, 148) des Gehäuses (6, 30, 52), bzw. des Lagerteiles (87, 101, 140, 151) widergelagert ist, und daß das Gehäuse, bzw. das Lagerteil auf der der Klemmbacke in Richtung des Spannelementes gegenüberliegenden Seite über ein Halteelement (12 bzw. 24, 43, 44, 73, 74, 100, 107, 108, 149) am Profilträger (1) bzw. Halteelement gegen die Wirkung des Spannelementes festgelegt ist.

2. Halterung nach Anspruch 1,
dadurch gekennzeichnet,
daß das Halteelement ebenfalls aus einer Klemmbacke (50) mit davon parallel zur Oberfläche (3) des Flansches (2) ausgehendem Spannelement (16) mit endständigem Spannteil (12, 44) besteht, das gegen die Wirkung des Spannelementes (16) über eine mit ihm in Eingriff befindliche Ausnehmung (11, 37) des Gehäuses (6, 30) bzw. des Lagerteiles widergelagert ist, und daß die Klemmbacke (50) eine zum Rand (4) des Flansches (2) im wesentlichen parallele Kante (5) des Profilträgers (1) umgreift.

3. Halterung nach Anspruch 1 oder 2,
dadurch gekennzeichnet,
daß das Spannelement eine in einer Bohrung (46 -48) der Klemmbacke (17, 49 - 51, 67, 68, 96, 97, 109, 145) drehbare und mit ihrem Kopf (18, 69, 70, 98, 99) an ihr axial festgelegte oder festlegbare Schraube (15, 16, 66, 94, 95, 110, 155) ist.

4. Halterung nach Anspruch 1, 2 oder 3,
dadurch gekennzeichnet,
daß die Klemmbacke (17, 49 - 51, 67, 68, 96, 97, 109, 145) den Rand (4) des Flansches (2) bzw. die Profilkante (5) mit einem sich an einen Klemmbackenkörper (19) mit im wesentlichen würfelförmiger Außenkontur anschließenden keilförmigen Einschnitt (20) umgreift, daß eine Flanke (21) des Einschnittes eine Wand des Klemmbackenkörpers zum Teil bildet und auf der Oberfläche (3) des Flansches (2) aufliegt, und daß vom Klemmbackenkörper das Spannelement (15, 16, 66, 94, 95, 110, 155) ausgeht.

5. Halterung nach einem oder mehreren der Ansprüche 1 bis 4,
dadurch gekennzeichnet,
daß das Spannteil (12, 43 - 45, 64, 92, 93, 112, 146, 147, 153) ein mit einer seiner Flächen auf der Oberfläche (3) des Flansches (2) aufliegendes, quaderförmiges Bauteil ist.

6. Halterung nach Anspruch 5,
dadurch gekennzeichnet,
daß das Spannteil (12, 43 - 45, 64, 92, 93, 112, 146, 147, 153) eine Gewindebohrung (13, 45, 65) für den Eingriff der Schraube (15, 16, 66, 94, 95, 110, 155) aufweist.

7. Halterung nach Anspruch 5 oder 6,
dadurch gekennzeichnet,
daß das Spannteil (12, 43 - 45, 64, 92, 93, 112, 146, 147, 153) unmittelbar in der Ausnehmung (11, 37, 38, 58, 59, 90, 91, 116, 117, 148) des Gehäuses (6, 30, 52), bzw. des Lagerteiles (87, 101, 140, 151) sitzt.

8. Halterung nach Anspruch 5 oder 6,
dadurch gekennzeichnet,
daß das Spannteil (43- 45, 64) über einen an ihm angeordneten hakenförmigen Ansatz (39 - 41, 62, 63) in die Ausnehmung (37, 38, 58, 59) des Gehäuses (30, 52), bzw. des Lagerteiles eingreift.

9. Halterung nach Anspruch 1, 2 oder 7,
dadurch gekennzeichnet,
daß das Spannelement (15, 16) eine quer zu seiner Längserstreckung neben der Klemmbacke (17) gelegene, zur Flanschfläche (3) im wesentlichen senkrechte Gehäusewand (9, 10) über eine Gehäusebohrung (14) durchragt und daß die Ausnehmung (11) für das Spannteil (12) auf der der Klemmbacke (17) abgewandten Seite der Gehäusewand (9, 10) im auf der Flanschfläche (3) liegenden Gehäuseboden (8) angeordnet ist.

10. Halterung nach Anspruch 9,
dadurch gekennzeichnet,
daß die Ausnehmung (11) unmittelbar neben der Gehäusewand (9, 10) angeordnet ist.

11. Halterung nach Anspruch 1,
dadurch gekennzeichnet,
daß das Halteelement mindestens ein Haken (24) ist, daß der Haken mit seinem einen Ende eine von der Klemmbacke (17) entfernte, zur Längserstreckung des Spannelementes (15) und zur Flanschfläche (3) senkrechte Gehäusewand (9) des Rollenlagers über wenigstens eine Gehäuseöffnung (26, 27) haltend durchfaßt, und daß der Haken mit seinem anderen Ende gegen die Wirkung des Spannelementes am Profilträger (1) festgelegt ist.

12. Halterung nach Anspruch 1 oder 2,
dadurch gekennzeichnet,
daß das Spannelement (66) zu einer neben der Klemmbacke (49, 51, 67, 68) gelegenen, zur Flanschfläche (3) im wesentlichen senkrechten Gehäusewand (31, 32, 54, 55) parallel ist, und daß die Ausnehmung für das Spannteil (43, 64) eine neben dem Spannelement gelegene Öffnung (38, 58, 59) der Gehäusewand ist.

13. Halterung nach Anspruch 8 und 12,
dadurch gekennzeichnet,
daß das Spannteil (43 - 45, 64) über seinen hakenförmigen Ansatz (39 - 41, 62, 63) in die Öffnung (37, 38, 58, 59) der Gehäusewand (31, 32, 54, 55) eingreift.

14. Halterung nach Anspruch 1,
dadurch gekennzeichnet,
daß das Halteelement mindestens ein Haken (73, 74) ist, daß der Haken mit seinem einen Ende (71, 72) eine neben der Klemmbacke (67, 68) gelegene, zum Spannelement (66) parallele und zur Flanschfläche (3) im wesentlichen senkrechte Gehäusewand (54, 55) über wenigstens eine von der Klemmbacke entfernte Gehäuseöffnung (60, 61) haltend durchfaßt, und daß der Haken mit seinem anderen Ende (75, 76) gegen die Wirkung des Spannelementes am Profilträger (1) festgelegt ist.

15. Halterung nach Anspruch 1, 7 oder 8,
dadurch gekennzeichnet,
daß das auf der Oberfläche (3) des Flansches (2) aufliegende Lagerteil (87) für zwei einander gegenüberliegende sowie untereinander und zur Oberfläche des Flansches parallele Kanten (83, 84) des Schlittens (80) beidseitig je ein eine der Kanten (83, 84) umgreifendes Profil (85, 86) aufweist, daß das Spannelement (94, 95) jeweils einer neben jeder Kante angeordneten Klemmbacke (96, 97) in dem Profil sitzt, und daß das Lagerteil auf der den Klemmbacken gegenüberliegenden Seite das mit dem Profilträger (1) in Eingriff befindliche Halteelement (100) bildet.

16. Halterung nach Anspruch 15,
dadurch gekennzeichnet,
daß die Kanten (83, 84) seitlich an den Klemmbacken und den von den Spannelementen getragenen Klemmteilen (92, 93) geführt sind.

17. Halterung nach Anspruch 15,
dadurch gekennzeichnet,
daß das Halteelement ein eine Kante (5) des Profilträgers (1) umfassender, hakenförmiger Ansatz (100) des Lagerteiles (87) ist.

18. Halterung nach Anspruch 1, 7 oder 8,
dadurch gekennzeichnet,
daß das auf der Oberfläche (3) des Flansches (2) aufliegende Lagerteil (101, 140, 151) Mittel (102, 142, 154) zur Aufnahme der Rohrleitung (103, 141) aufweist, daß die Spannteile (112, 146, 147, 153) der beidseits der Rohrleitung (103, 141) angeordneten Klemmbacken (109, 145) mit dem Lagerteil (101, 151) oder den Mitteln (142) zur Aufnahme der Rohrleitung (103, 141) in widerlagerndem Eingriff sind, daß das Lagerteil (101, 140, 151) auf der den Klemmbacken (109, 145) gegenüberliegenden Seite das mit dem Profilträger (1) in Eingriff befindliche Halteelement (107, 108, 149) bildet, und daß am Lagerteil (101) bzw. an den Mitteln (142) zur Aufnahme der Rohrleitung (103, 141) wenigstens ein die Rohrleitung umfassender Bügel (104, 143, 144) befestigt ist.

19. Halterung nach Anspruch 18,
dadurch gekennzeichnet,
daß die Mittel zur Aufnahme der Rohrleitung (103) eine zu dieser parallele Rinne (102) des Lagerteiles (101) sind, und daß die Spannteile (112) in eine jeweils neben der Rinne (102) gelegene Ausnehmung (116, 117) des Lagerteiles (101) eingreifen.

20. Halterung nach Anspruch 19,
daß das Lagerteil (101) aus einem Blechzuschnitt besteht, aus dem die Rinne (102) durch beidseitige Biegung je eines im wesentlichen U-förmigen, zur Rohrleitung (103) parallel verlaufenden Profils (105, 106) gebildet ist, daß die Spannelemente (110) in das Profil ragen, und daß die Ausnehmungen Fenster (116, 117) in der Oberseite (114, 115) des Profils sind.

21. Halterung nach Anspruch 20,
dadurch gekennzeichnet,
daß die die Fenster (116, 117) durchragenden Spannteile (112) auf der Außenseite des Profils (105, 106) mit dem Kopf einer T-förmigen Profilierung (113) anliegen.

22. Halterung nach Anspruch 18,
dadurch gekennzeichnet,
daß die Mittel zur Aufnahme der Rohrleitung (141) eine auf dem Lagerteil (140) befestigte Stütze (142) sind, und daß die Spannteile (146, 147) in Ausnehmungen (148) der Stütze (142) eingreifen.

23. Halterung nach Anspruch 18,
dadurch gekennzeichnet,
daß die Mittel zur Aufnahme der Rohrleitung eine auf dem Lagerteil (151) befestigte Stütze (154) sind, und daß die Spannteile (153) eine zum Rand (4) des Flansches (2) im wesentlichen parallele Aufbiegung (152) des Lagerteiles (151) hintergreifen.

24. Halterung nach Anspruch 22 oder 23,
dadurch gekennzeichnet,
daß das Lagerteil (140, 151) ein Blechzuschnitt ist.

25. Halterung nach einem oder mehreren der Ansprüche 18 bis 24,
dadurch gekennzeichnet,
daß das Halteelement durch wenigstens einen eine Kante (5) des Profilträgers (1) umfassenden Haken (107, 108, 149) des Blechzuschnittes (101, 140, 151) gebildet ist.

## Claims

1. Bracket for supporting a pipe (103, 141) on a sectional beam (1), wherein the pipe (103, 141) can be moved axially or fixed axially on a flange (2) of the sectional beam (1) by means of a roller bearing comprising a housing (6, 30, 52), by means of a carriage (80, 130), which can be displaced on a bearing part (87), or directly via a bearing part (101, 140, 151), and wherein the bracket comprises at least one gripping jaw (7, 49 - 51, 67, 68, 96, 97, 109, 145), which embraces an edge (4) of the flange (2), and a clamping element (15, 6, 66, 94, 95, 110, 155), which extends from the latter essentially parallel to the pipe (103, 41) and to the surface (3) of the flange (2) and which bears a clamping part (12, 43, 44, 64, 92, 93, 112, 146, 147, 153) at its free end which is remote from the gripping jaw (17, 49 - 51, 67, 68, 96, 97, 109, 145), characterised in that the clamping part is secured against twisting and is supported against the action of the clamping element via a recess (11, 37, 38, 58, 59, 90, 91, 116, 117, 148), with which it is engaged, in the housing (6, 30, 52) or in the bearing part (87, 101, 140, 151), and that the housing or the bearing part is fixed via a holding element (12 or 24, 43, 44, 73, 74, 100, 107, 108, 149) on the sectional beam (1) or holding element against the action of the clamping element on the side opposite the gripping jaw in the direction of the clamping element.

2. Bracket according to claim 1, characterised in that the holding element also consists of a gripping jaw (50) with a clamping element (16) extending from the latter parallel to the surface (3) of the flange (2) and having an end clamping part (12, 44) which is supported against the action of the clamping element (16) via a recess (11, 37), with which it is engaged, in the housing (6, 30) or in the bearing part, and that the gripping jaw (50) embraces an edge (5) of the sectional beam (1) which is essentially parallel to the edge (4) of the flange (2).

3. Bracket according to claim 1 or 2, characterised in that the clamping element is a screw (15, 16, 66, 94, 95, 110, 155) which can turn in a hole (46 - 48) in the gripping jaw (17, 49 - 51, 67, 68, 96, 97, 109, 145) and is or can be axially fixed thereon by way of its head (18, 69, 70, 98, 99).

4. Bracket according to claim 1, 2 or 3, characterised in that the gripping jaw (17, 49 - 51, 67, 68, 96, 97, 109, 145) embraces the edge (4) of the flange (2) or the section edge (5) by way of a wedge-shaped notch (20) adjoining a gripping jaw body (19) with an essentially cubic outer contour, that a flank (21) of the notch partly forms a wall of the gripping jaw body and lies on the surface (3) of the flange (2), and that the clamping element (15, 16, 66, 94, 95, 110, 155) extends from the gripping jaw body.

5. Bracket according to one or more of claims 1 to 4, characterised in that the clamping part (12, 43 - 45, 64, 92, 93, 112, 146, 147, 153) is a cuboid component which lies with one of its faces on the surface (3) of the flange (2).

6. Bracket according to claim 5, characterised in that the clamping part (12, 43 - 45, 64, 92, 93, 112, 146, 147, 153) comprises a tapped hole (13, 45, 65) for the engagement of the screw (15, 16, 66, 94, 95, 110, 155).

7. Bracket according to claim 5 or 6, characterised in that the clamping part (12, 43 - 45, 64, 92, 93, 112, 146, 147, 153) is seated directly in the recess (11, 37, 38, 58, 59, 90, 91, 116, 117, 148) in the housing (6, 30, 52) or in the bearing part (87, 101, 140, 151).

8. Bracket according to claim 5 or 6, characterised in that the clamping part (43 - 45, 64) engages via a hook-shaped extension (39 - 41, 62, 63), which is disposed on it, in the recess (37, 38, 58, 59) in the housing (30, 52) or in the bearing part.

9. Bracket according to claim 1, 2 or 7, characterised in that the clamping element (15, 16) projects via a housing hole (14) through a housing wall (9, 10), which is positioned transversely to its longitudinal extent next to the gripping jaw (17) and is essentially perpendicular to the flange face (3), and that the recess (11) for the clamping part (12) is disposed in the housing base (8), which lies on the flange face (3), on the side of the housing wall (9, 10) which is remote from the gripping jaw (17).

10. Bracket according to claim 9, characterised in that the recess (11) is disposed directly next to the housing wall (9, 10).

11. Bracket according to claim 1, characterised in that the holding element is at least one hook (24), that the hook engages by way of one of its ends via at least one housing opening (26, 27) through a housing wall (9), which is remote from the gripping jaw (17) and perpendicular to the longitudinal extent of the clamping element (15) and to the flange face (3), of the roller bearing so as to retain this wall, and that the hook is fixed by way of its other end on the sectional beam (1) against the action of the clamping element.

12. Bracket according to claim 1 or 2, characterised in that the clamping element (66) is parallel to a housing wall (31, 32, 54, 55) which is positioned next to the gripping jaw (49, 51, 67, 68) and is essentially perpendicular to the flange face (3), and that the recess for the clamping part (43, 64) is an opening (38, 58, 59), positioned next to the clamping element, in the housing wall.

13. Bracket according to claims 8 and 12, characterised in that the clamping part (43 - 45, 64) engages via its hook-shaped extension (39 - 41, 62, 63) in the opening (37, 38, 58, 59) in the housing wall (31, 32, 54, 55).

14. Bracket according to claim 1, characterised in that the holding element is at least one hook (73, 74), that the hook engages by way of one of its ends (71, 72) via at least one housing opening (60, 61), which is remote from the gripping jaw, through a housing wall (54, 55), which is positioned next to the gripping jaw (67, 68), is parallel to the clamping element (66) and essentially perpendicular to the flange face (3), so as to retain this wall, and that the hook is fixed by way of its other end (75, 76) on the sectional beam (1) against the action of the clamping element.

15. Bracket according to claim 1, 7 or 8, characterised in that the bearing part (87) lying on the surface (3) of the flange (2) comprises on each side a respective section (85, 86) for two edges (83, 84) of the carriage (80) lying opposite one another and parallel to one another and to the surface of the flange, which sections each embrace one of the edges (83, 84), that the clamping element (94, 95) of a respective gripping jaw (96, 97) disposed next to each edge is seated in the section, and that the bearing part forms the holding element (100), which is engaged with the sectional beam (1), on the side opposite the gripping jaws.

16. Bracket according to claim 15, characterised in that the edges (83, 84) are guided laterally at the gripping jaws and the gripping parts (92, 93) borne by the clamping elements.

17. Bracket according to claim 15, characterised in that the holding element is a hook-shaped extension (100), which embraces an edge (5) of the sectional beam (1), of the bearing part (87).

18. Bracket according to claim 1, 7 or 8, characterised in that the bearing part (101, 140, 151) lying on the surface (3) of the flange (2) comprises means (102, 142, 154) for holding the pipe (103, 141), that the clamping parts (112, 146, 147, 153) of the gripping jaws (109, 145) disposed on both sides of the pipe (103, 141) are in abutting engagement with the bearing part (101, 151) or the means (142) for holding the pipe (103, 141), that the bearing part (101, 140, 151) forms the holding element (107, 108, 149), which is engaged with the sectional beam (1), on the side opposite the gripping jaws (109, 145), and that at least one strap (104, 143, 144), which embraces the pipe, is secured to the bearing part (101) or to the means (142) for holding the pipe (103, 141).

19. Bracket according to claim 18, characterised in that the means for holding the pipe (103) are a channel (102), which is parallel to the latter, of the bearing part (101), and that the clamping parts (112) engage in a recess (116, 117), in each case positioned next to the channel (102), in the bearing part (101).

20. Bracket according to claim 19, characterised in that the bearing part (101) consists of a sheet blank from which the channel (102) is formed by bending on both sides a respective, essentially U-shaped section (105, 106) extending parallel to the pipe (103), that the clamping elements (110) project into the section, and that the recesses are windows (116, 117) in the top side (114, 115) of the section.

21. Bracket according to claim 20, characterised in that the clamping parts (112) projecting through the windows (116, 117) bear against the outside of the section (105, 106) by way of the head of a T-shaped section (113).

22. Bracket according to claim 18, characterised in that the means for holding the pipe (141) are a support (142) secured to the bearing part (140), and that the clamping parts (146, 147) engage in recesses (148) in the support (142).

23. Bracket according to claim 18, characterised in that the means for holding the pipe are a support (154) secured to the bearing part (151), and that the clamping parts (153) engage behind an upward bent part (152) of the bearing part (151) which is essentially parallel to the edge (4) of the flange (2).

24. Bracket according to claim 22 or 23, characterised in that the bearing part (140, 151) is a sheet blank.

25. Bracket according to one or more of claims 18 to 24, characterised in that the holding element is formed by at least one hook (107, 108, 149), which embraces an edge (5) of the sectional beam (1), of the sheet blank (101, 140, 151).

## Revendications

1. Attache pour supporter une tuyauterie (103, 141) sur une poutre profilée (1), la tuyauterie (103, 141) pouvant ce faisant être déplacée sur le plan axial ou être fixée sur le plan axial au moyen d'un palier à rouleaux présentant un logement (6, 30, 52), au moyen d'un glissoir (80, 130) pouvant être déplacé sur une pièce d'appui (87) ou directement par l'intermédiaire d'une pièce d'appui (101, 140, 151) sur une bride (2) de la poutre profilée (1), et l'attache présentant ce faisant au moins une mâchoire de serrage (17, 49 - 51, 67, 68, 96, 97, 109, 145) entourant un bord (4) de la bride (2) et un élément de serrage (15, 6, 66, 94, 95, 110, 155) partant de celle-ci essentiellement parallèlement à la tuyauterie (103, 141) et à la surface (3) de la bride (2), qui, à son extrémité libre opposée à la mâchoire de serrage (17, 49 - 51, 67, 68, 96, 97, 109, 145), supporte une pièce de serrage (12, 43, 44, 64, 92, 93, 112, 146, 147, 153),
caractérisée en ce que
la pièce de serrage est protégée contre un mouvement de torsion et est bloquée par contre-appui contre l'action de l'élément de serrage, par l'intermédiaire d'un creux (11, 37, 38, 58, 59, 90, 91, 116, 117, 148) du logement (6, 30, 52) ou de la pièce d'appui (87, 101, 140, 151), se trouvant en prise avec lui, et en ce que le logement, ou la pièce d'appui, est fixé(e) contre l'action de l'élément de serrage sur le côté opposé à la mâchoire de serrage dans la direction de l'élément de serrage par l'intermédiaire d'un élément de retenue (12, 24, 43, 44, 73, 74, 100, 107, 108, 149) sur la poutre profilée (1) ou l'élément de retenue.

2. Attache selon la revendication 1, caractérisée en ce que l'élément de retenue se compose également d'une mâchoire de serrage (50) avec un élément de serrage (16) partant de celle-ci parallèlement à la surface (3) de la bride (2) avec une pièce de serrage d'extrémité (12, 44), qui est bloquée par contre-appui contre l'action de l'élément de serrage (16) par l'intermédiaire d'un creux (11, 37), du logement (6, 30) ou de la pièce d'appui, se trouvant en prise avec celui-ci, et en ce que la mâchoire de serrage (50) entoure un bord (5) de la poutre profilée (1) pour l'essentiel parallèle au bord (4) de la bride (2).

3. Attache selon la revendication 1 ou la revendication 2, caractérisée en ce que l'élément de serrage est une vis (15, 16, 66, 94, 95, 110, 155) pouvant tourner dans un alésage (46 - 48) de la mâchoire de serrage (17, 49 - 51, 67, 68, 96, 97, 109, 145) et fixée ou pouvant être fixée à celle-ci sur le plan axial avec sa tête (18, 69, 70, 98, 99).

4. Attache selon la revendication 1, 2 ou 3, caractérisée en ce que la mâchoire de serrage (17, 49 - 51, 67, 68, 96, 97, 109, 145) entoure le bord (4) de la bride (2) ou le bord profilé (5) avec une entaille (20) en forme de coin reliée à un corps de mâchoire de serrage (19) avec un contour extérieur pour l'essentiel en forme de cube, en ce qu'un flanc (21) de l'entaille constitue pour partie une paroi du corps de la mâchoire de serrage et repose sur la surface (3) de la bride (2), et en ce que l'élément de serrage (15, 16, 66, 94, 95, 110, 155) part du corps de la mâchoire de serrage.

5. Attache selon une ou plusieurs des revendications 1 à 4, caractérisée en ce que la pièce de serrage (12, 43 - 45, 64, 92, 93, 112, 146, 147, 153) est une pièce de construction en forme de parallélépipède, reposant avec l'une de ses surfaces contre la surface (3) de la bride (2).

6. Attache selon la revendication 5, caractérisée en ce que la pièce de serrage (12, 43 - 45, 64, 92, 93, 112, 146, 147, 153) présente un alésage fileté (13, 45, 65) pour l'engagement de la vis (15, 16, 66, 94, 95, 110, 155).

7. Attache selon la revendication 5 ou 6, caractérisée en ce que la pièce de serrage (12, 43 - 45, 64, 92, 93, 112, 146, 147, 153) repose directement dans le creux (11, 37. 38, 58, 59, 90, 91, 116, 117, 148) du logement (6, 30, 52) ou de la pièce d'appui (87, 101, 140, 151).

8. Attache selon la revendication 5 ou la revendication 6, caractérisée en ce que la pièce de serrage (43 - 45, 64) s'engage en prise au moyen d'un embout en forme de crochet qui lui est associé (39 - 41, 62, 63) dans le creux (37, 38, 58, 59) du logement (30, 52) ou de la pièce d'appui.

9. Attache selon la revendication 1, 2 ou 7, caractérisée en ce que l'élément de serrage (15, 16) traverse une paroi du logement (9, 10) posée transversalement à sa trajectoire longitudinale à proximité de la mâchoire de serrage (17) pour l'essentiel perpendiculaire à la surface de la bride (3) par l'intermédiaire d'un alésage du logement (14), et en ce que le creux (11) pour la pièce de serrage (12) est disposé sur le côté de la paroi du logement (9, 10) opposé à la mâchoire de serrage (17) dans le fond du logement (8) reposant sur la surface de la bride (3).

10. Attache selon la revendication 9, caractérisée en ce que le creux (11) est disposé immédiatement à proximité de la paroi de logement (9, 10).

11. Attache selon la revendication 1, caractérisée en ce que l'élément de retenue est au moins un crochet (24), en ce que le crochet, avec l'une de ses extrémités, enserre de façon bloquante une paroi de logement (9) du palier à rouleaux perpendiculaire à la surface de bride (3) et à la trajectoire longitudinale de l'élément de serrage (15) et éloignée de la mâchoire de serrage (17), par l'intermédiaire d'au moins une ouverture du logement (26, 27), et en ce que le crochet est fixé à la poutre profilée (1) avec son autre extrémité contre l'action de l'élément de serrage.

12. Attache selon la revendication 1 ou la revendication 2, caractérisée en ce que l'élément de serrage (66) est parallèle à une paroi de logement (31, 32, 54, 55) placée à proximité de la mâchoire de serrage (49, 51, 67, 68), pour l'essentiel perpendiculaire à la surface de bride (3), et en ce que le creux pour la pièce de serrage (43, 64) est une ouverture (38, 58, 59) de la paroi de logement placée à proximité de l'élément de serrage.

13. Attache selon la revendication 8 ou la revendication 12, caractérisée en ce que la pièce de serrage (43 - 45, 64) s'engage en prise au moyen de son embout en forme de crochet (39 - 41, 62, 63) dans l'ouverture (37, 38, 58, 59) de la paroi de logement (31, 32, 54, 55).

14. Attache selon la revendication 1, caractérisée en ce que l'élément de retenue est au moins un crochet (73, 74), en ce que le crochet, avec l'une de ses extrémités (71, 72), enserre de façon bloquante une paroi de logement (54, 55) pour l'essentiel perpendiculaire à la surface de bride (3), placée à proximité de la mâchoire de serrage (67, 68) et parallèle à l'élément de serrage (66), par l'intermédiaire d'au moins une ouverture de logement (60, 61) éloignée de la mâchoire de serrage, et en ce que le crochet est fixé à la poutre profilée (1) avec son autre extrémité (75, 76) contre l'action de l'élément de serrage

15. Attache selon la revendication 1, 7 ou 8, caractérisée en ce que la pièce d'appui (87) reposant sur la surface (3) de la bride (2) présente, des deux côtés, pour deux bords (83, 84) du glissoir (80) opposés, ainsi que l'un sous l'autre et parallèles à la surface de la bride, respectivement, un profilé (85, 86) entourant l'un des bords (83, 84), en ce que l'élément de serrage (94, 95) d'une mâchoire de serrage (96, 97) placée respectivement à proximité de chaque bord est logé dans le profilé, et en ce que la pièce d'appui forme, sur le côté opposé aux mâchoires de serrage, l'élément de retenue (100) qui se trouve en prise avec la poutre profilée (1).

16. Attache selon la revendication 15, caractérisée en ce que les bords (83, 84) sont guidés latéralement dans les mâchoires de serrage et dans les pièces de serrage (92, 93) supportées par les éléments de serrage.

17. Attache selon la revendication 15, caractérisée en ce que l'élément de retenue est un embout en forme de crochet (100) de la pièce d'appui (87) enserrant un bord (5) de la poutre profilée (1).

18. Attache selon la revendication 1, 7 ou 8, caractérisée en ce que la pièce d'appui (101, 140, 151) reposant sur la surface (3) de la bride(2), présente des moyens (102, 142, 154) pour recevoir la tuyauterie (103, 141), en ce que les parties de serrage (112, 146, 147, 153) des mâchoires de serrage (109, 145) disposées des deux côtés de la tuyauterie (103, 141) se trouvent en relation de prise par contre-appui avec la pièce d'appui (101, 151) ou les moyens (142) destinés à recevoir la tuyauterie (103, 141), en ce que la pièce d'appui (101, 140, 151) forme sur le côté opposé aux mâchoires de serrage (109, 145) l'élément de retenue (107, 108, 149) se trouvant en prise avec la poutre profilée (1), et en ce qu'au moins une pièce recourbée en arceau (104, 143, 144) enserrant la tuyauterie est fixée à la pièce d'appui (101) ou aux moyens (142) pour recevoir la tuyauterie (103, 141).

19. Attache selon la revendication 18, caractérisée en ce que les moyens destinés à recevoir la tuyauterie (103) sont un canal semi-circulaire parallèle à celle-ci (102) de la pièce d'appui (101), et en ce que les pièces de serrage (112) s'engagent dans un creux (116, 117) de la pièce d'appui (101) aménagé respectivement à proximité du canal semi-circulaire (102).

20. Attache selon la revendication 19, caractérisée en ce que la pièce d'appui (101) se compose d'une découpe de tôle, à partir de laquelle le canal semi-circulaire (102) est formé par recourbement des deux côtés d'un profilé (105, 106) respectif s'étendant parallèlement à la tuyauterie (103) pour l'essentiel en forme de U, en ce que les éléments de serrage (110) pénètrent dans le profilé, et en ce que les creux sont des fenêtres (116, 117) dans la partie supérieure (114, 115) du profilé.

21. Attache selon la revendication 20, caractérisée en ce que les pièces de serrage (112) traversant les fenêtres (116, 117) reposent sur la face extérieure du profilé (105, 106) avec la tête d'un profilage en forme de T (113).

22. Attache selon la revendication 18, caractérisée en ce que les moyens destinés à recevoir la tuyauterie (141) sont un support (142) fixé à la pièce d'appui (140), et en ce que les pièces de serrage (146, 147) s'engagent en prise dans les creux (148) du support (142).

23. Attache selon la revendication 18, caractérisée en ce que les moyens destinés à recevoir la tuyauterie sont un support (154) fixé à la pièce d'appui (151), et en ce que les pièces de serrage (153) s'engagent en prise à l'arrière d'une partie recourbée (152) de la pièce d'appui (151) pour l'essentiel parallèle au bord (4) de la bride (2).

24. Attache selon la revendication 22 ou la revendication 23, caractérisée en ce que la pièce d'appui (140, 151) est une découpe de tôle.

25. Attache selon une ou plusieurs des revendications 18 à 24, caractérisée en ce que l'élément de retenue est formé par au moins un crochet (107, 108, 149) de la découpe de tôle (101, 140, 151) enserrant un bord (5) de la poutre profilée (1).
